# EUROPÄISCHE PATENTANMELDUNG

(11) **EP 1 088 475 A1**
(43) Veröffentlichungstag der Anmeldung: **04.04.2001**
(21) Anmeldenummer: 00120436.1
(22) Anmeldetag: 19.09.2000
(51) Int. Cl.: A01C 17/00

(54) **Düngerstreuer**

(30) Priorität: 30.09.1999 DE 19946851
(71) Anmelder: Amazonen-Werke H. Dreyer GmbH & Co. KG, 49205 Hasbergen (DE)
(72) Erfinder: Dreyer, Heinz, Dr., 49205 Hasbergen (DE)

(57) **Zusammenfassung**

Düngerstreuer, insbesondere zum Ausbringen von körnigem und pulverigem Material, mit einem Rahmen (2), eigenem Fahrwerk (3) und einem auf dem Rahmen befestigten Vorratsbehälter (1) und zumindest einem Streuorgan (16) zum Verteilen des Materials und zumindest einem Transportband (4) zum Materialfördern zu dem Streuorgan (16), welches vorzugsweise zwei um aufrechte Achsen rotierende mit Wurfschaufeln (15) besetzte Schleuderscheiben (16) aufweist, wobei der Vorratsbehälter (1) als, in Fahrtrichtung langgestreckter Behälter ausgebildet ist und im unteren Bereich des Vorratsbehälters zumindest ein über Umlenkrollen (9) geführtes, umlaufendes Transportband (4) angeordnet ist, wobei in der der Förderrichtung zugewandten Vorratsbehälterwand sich eine zumindest über einen Schieber (5) einstellbare Auslauföffnung (6) befindet. Unter dem Förderende des(r) Transportbandes (4)(Transportbänder) sind zwei in entgegengesetzter und quer zur Fahrtrichtung nach außen fördernde Querförderbänder (12) angeordnet, wobei unterhalb jedes Förderendes der Querförderbänder (12) jeweils eine rotierend angetriebene und mit Wurfschaufeln (15) besetzte Schleuderscheibe (16) angeordnet ist. Oberhalb jeder Schleuderscheibe (16) und in einem Abstand zum Ende jedes Querförders (12) ist jeweils ein Leitelement (17) zum Leiten des Düngers auf die Schleuderscheibe (16) angeordnet.

## Beschreibung

Die Erfindung betrifft einen Düngerstreuer gemäß des Oberbegriffes des Patentanspruches 1.

Ein derartiger Düngerstreuer ist beispielsweise in der US-PS 30 85 807 beschrieben. Mittels des in Längsrichtung des langgestreckten angeordneten Transportbandes wird das sich im Vorratsbehälter befindliche Material zwei dicht nebeneinander angeordneten Schleuderscheiben zugeführt. Aufgrund der dicht nebeneinander liegenden Anordnung der Schleuderscheiben und einem relativ kleinen Flugkreisdurchmesser der Schaufelenden lassen sich nur relativ geringe Streubreiten erzielen. Um auch bei Düngerstreuern, die ein eigenes Fahrwerk sowie einen langgestreckten trichterförmigen Vorratsbehälter aufweisen, große Arbeitsbreiten, von 36 m und mehr zu erzielen, ist der Flugkreisdurchmesser zu gering. Auch eine Erhöhung der Drehzahl der Schleuderscheiben, um eine größere Abwurfgeschwindigkeit der Düngerpartikel von den Wurfschaufeln zu erreichen, läßt sich nicht verwirklichen, weil durch die Schlagenergie beim Auftreffen der Düngerkörner auf die Wurfschaufeln die Düngerkörner zerschlagen werden, so daß der Dünger nicht auf die große Abwurfgeschwindigkeit gebracht werden kann.

Der Erfindung liegt die Aufgabe zugrunde, für gattungsgemäße Schleuderdüngerstreuer mit einfachen Maßnahmen die Voraussetzung für große Arbeitsbreiten zu schaffen.

Diese Aufgabe wird erfindungsgemäß durch die kennzeichnenden Merkmale des Anspruches 1 gelöst. Infolge dieser Maßnahmen wird das im mittleren Bereich des Düngerstreuers dosierte Material von den unterhalb des Transportbandes angeordneten Querförderbändern nach außen zu den in einem großen Achsabstand zueinander angeordneten rotierenden Schleuderscheiben gefördert. Mittels des in einem Abstand zum Ende eines jeden Querförderers angeordneten Leitelementes wird der Dünger anschließend gezielt auf die Schleuderscheibe aufgegeben. Um eine individuelle Anpassung der Düngerausbringmenge an die Nährstoffversorgung des Bodens in Teilarbeitsbreitenbereichen erreichen zu können, ist vorgesehen, daß in der Vorratsbehälterwand zwei Auslauföffnungen angeordnet sind, die jeweils von einem Schieber in ihrer Öffnungsweite individuell mittels Einsteilmittel einstellbar sind.

Um bei Düngerstreuern, die ein einziges Förderband aufweisen, den Düngemittelstrom, der von diesen Transportbändern in einstellbarer Menge gefördert wird, in zwei Teilströme aufteilen zu können, ist vorgesehen, daß zwischen den Förderenden des Förderbandes und den Querförderbändern ein dachförmiges Element angeordnet ist.

Um eine Aufgabepunktänderung des Düngers auf der Schleuderscheibe erreichen zu können, ist vorgesehen, daß die Leitelemente in ihrer Winkellage einstellbar sind.

Um auch beim Ausbringen von Material beim Fahren quer zur Hangebene eine gezielte Aufgabe des Düngers durch die Leitelemente auf die Schleuderscheiben sicherzustellen, ist vorgesehen, daß die Leitelemente derart angeordnet sind, daß sie in Fahrtrichtung gesehen, mit ihren oberen Enden einen größeren Abstand zur Längsmittelachse des Streuers als mit ihren unteren Enden aufweisen.

Um den Düngerstreuer für verschiedene Arbeitsbreitenbereiche einsetzen zu können, ist vorgesehen, daß die Schleuderscheiben auswechselbar auf den Antriebswellen angeordnet und gegen anders ausgebildete Schleuderscheiben austauschbar sind. Hierbei können die jeweils optimalen Schleuderscheiben für die verschiedenen Arbeitsbreitenbereiche auf den Antriebswellen angeordnet werden. Es ist auch möglich, an Stelle die Schleuderscheiben mit den Wurfschaufeln auszutauschen, daß die Wurfschaufeln auswechselbar auf den Schleuderscheiben angeordnet und gegen anders ausgebildete Wurfschaufeln austauschbar sind.

Um eine Aufgabepunktveränderung des Düngers in Fahrtrichtung gesehen zu erreichen, ist vorgesehen, daß die Schleuderscheiben mit ihrem Antriebsgehäuse in Fahrtrichtung verschiebbar und in verschiedene Positionen einstellbar am Rahmen des Düngerstreuers angeordnet sind.

Um den sogenannten Mengeneffekt auszuschalten, ist vorgesehen, daß die Einstellung der Schieber und der Leitelemente miteinander gekoppelt sind. Hierdurch wird erreicht, daß bei einer Veränderung der Ausbringmenge gleichzeitig die Lage des Aufgabepunktes des Düngers auf der Schleuderscheibe automatisch richtig eingestellt wird.

Um eine vorteilhafte Förderung des Materials quer zur Fahrtrichtung mittels der Querförderbänder zu erreichen, ist vorgesehen, daß die Querförderbänder mit einer größeren Geschwindigkeit als das Transportband angetrieben werden. Hierdurch werden desweiteren auch die bestehenden Totzeiten verringert.

Um große Arbeitsbreiten zu erreichen und um zu gewährleisten, daß die von den einzelnen Schleuderscheiben erzeugten Streufächern sich nicht gegenseitig behindern, beträgt der Achsabstand der Schleuderscheiben zumindest 1,30 m, vorzugsweise etwa 1,50 m. Weitere Einzelheiten der Erfindung sind den übrigen Unteransprüchen, der Beispielsbeschreibung und den Zeichnungen zu entnehmen. Hierbei zeigen
- Fig.1: einen Düngerstreuer in der Ansicht von hinten und in Prinzipdarstellung,
- Fig.2: den Düngerstreuer in Seitenansicht und in Prinzip darstellung und
- Fig.3: einen weiteren Düngerstreuer in der Ansicht von hinten und in Prinzipdarstellung.

Der Großflächenstreuer ist mit einem Vorratsbehälter 1, einem Rahmen 2 und einem Fahrwerk 3 ausgestattet. In dem unteren Bereich des Vorratsbehälters 1 befindet sich das antreibbare und als Förderband 4 ausgebildete Förderorgan. In dem hinteren Bereich des Vorratsbehälters 1 sind die über die beiden Schieber 5 einstellbaren Auslauföffnungen 6 angeordnet. Das Förderband 4 ist in Förderrichtung 7 antreibbar. Dieses Förderband 4 wird von der Schlepperzapfwelle über eine Antriebswalze 8 und die Umlenkrolle 9 angetrieben.

Das Transportband 4 erstreckt sich über die gesamte untere Breite des Vorratsbehälters 1. Es ist jedoch auch möglich, zwei schmale Förderbänder nebeneinander anzuordnen und in dem Bereich zwischen den beiden schmalen Förderbändern ein langgestrecktes dachförmiges Abdeckelement als Boden vorzusehen.

Am hinteren Ende 10 des Förderbandes 4 ist das dachförmige Element 11 angeordnet, welches sicherstellt, daß die beiden von den Schiebern 5 und den Auslauföffnungen 6 in Verbindung mit dem Förderband 4 dosierten Materialströme den unterhalb des hinteren Endes 10 des Förderbandes 4 angeordneten Querförderbändern 12 zugeführt werden. Unterhalb dem Förderende 10 des Transportbandes 4 sind die zwei in entgegengesetzter und quer zur Fahrtrichtung 13 nach außen fördernden Querförderbänder 12 angeordnet. Die Querförderbänder 12 werden mit einer höheren Geschwindigkeit als das Transportband 4 angetrieben. Unterhalb jedes Förderendes 14 der Querförderbänder 12 ist jeweils eine rotierend angetriebene und mit Wurfschaufeln 15 besetzte Schleuderscheibe 16 angeordnet, welche das Material in Breitverteilung über den Boden verteilen. Oberhalb jeder Schleuderscheibe 16 und in einem Abstand zum Ende 14 jedes Querförderers 12 ist jeweils ein Leitelement 17 zum Leiten des Düngers auf die Schleuderscheibe 16 angeordnet.

Die Leitelemetente 17 sind in ihrer Winkellage in bevorzugter Weise einstellbar, um so den Aufgabepunkt des Düngers auf die Schleuderscheiben 16 einstellen zu können. Hiermit ist eine Arbeitsbreitenvatiation sowie eine Anpassung an die Streueigenschaften des auszubringenden Materials möglich. Hierbei sind die Leitelemente 17 derart angeordnet, daß sie in Fahrtrichtung 13 gesehen, mit ihren oberen Enden 18 einen größeren Abstand zur Längsmittelachse 19 des Streuers als mit ihren unteren Enden 20 aufweisen, um so auch in Hanglagen sicherzustellen, daß sie in jedem Falle ihre Leitfunktion ausführen können. Über die Lochstreben 21 können die Leitelemente 17 in der erforderlichen Position eingestellt werden.

Die als Spannrollen 22 wirkenden Umlenkrollen der Querförderbänder 12 sind im inneren Bereich angeordnet. Der Achsabstand A der Schleuderscheiben 16 beträgt zumindest 1,30 m, vorzugsweise etwa 1,50 m. Hierdurch ist es möglich, möglichst große Arbeitsbreiten zu erreichen.

Die Schleuderscheiben 16 sind auswechselbar auf ihren Antriebswellen 23 angeordnet und können gegen anders ausgebildete Schleuderscheiben ausgetauscht werden. Hierdurch ist es möglich, die jeweils geforderte Arbeitsbreite zu erreichen. Die Wurfschaufeln 15 können auswechselbar auf den Schleuderscheiben 16 angeordnet und gegen anders ausgebildete Wurfschaufeln austauschbar sein. Es ist auch möglich, daß die Wurfschaufeln 15 winkelverschwenkbar und in unterschiedlichen Positionen einstellbar auf den Schleuderscheiben 16 angeordnet sind.

In nicht dargestellter Weise sind die Schleuderscheiben 16 mit ihrem Antriebsgehäuse 24 in Fahrtrichtung 13 verschiebbar und in verschiedenen Positionen einstellbar am Rahmen 2 des Düngerstreuers angeordnet. In diesem Falle kann eine zusätzliche Aufgabevariation durch die Einstellung des Antriebsgehäuses 23 mit den Schleuderscheiben erfolgen.

Die Funktionsweise des Schleuderdüngerstreuers ist folgende:

Über das Transportband 4 in Verbindung mit den über die Einstellelemente 25 einstellbaren Schiebern 5, wird die jeweilige Auslauföffnung 6 eingestellt und somit die Materialausbringmenge festgelegt. Die Förderbänder 4 führen das Material über ihren hinteren Enden 10 den schnelllaufenden Querförderbändern 12 zu. Das dachförmige Element 11 stellt sicher, daß die Düngerströme dem jeweiligen Querförderband 12 zugeführt werden. Die Querförderbänder 12 werfen aufgrund ihrer hohen Geschwindigkeit das Material gegen die Leitelemente 17, die aufgrund ihrer nach unten-innen geneigten Stellung auch bei quer zur Hangfahrt das dosierte Material in definierter Weise den Schleuderscheiben 16 zuleiten. Durch eine entsprechende Einstellung der Leitelemente 17 über den Lochstreben 21 kann der Aufgabepunkt des Düngers auf die Schleuderscheiben 16 eingestellt werden.

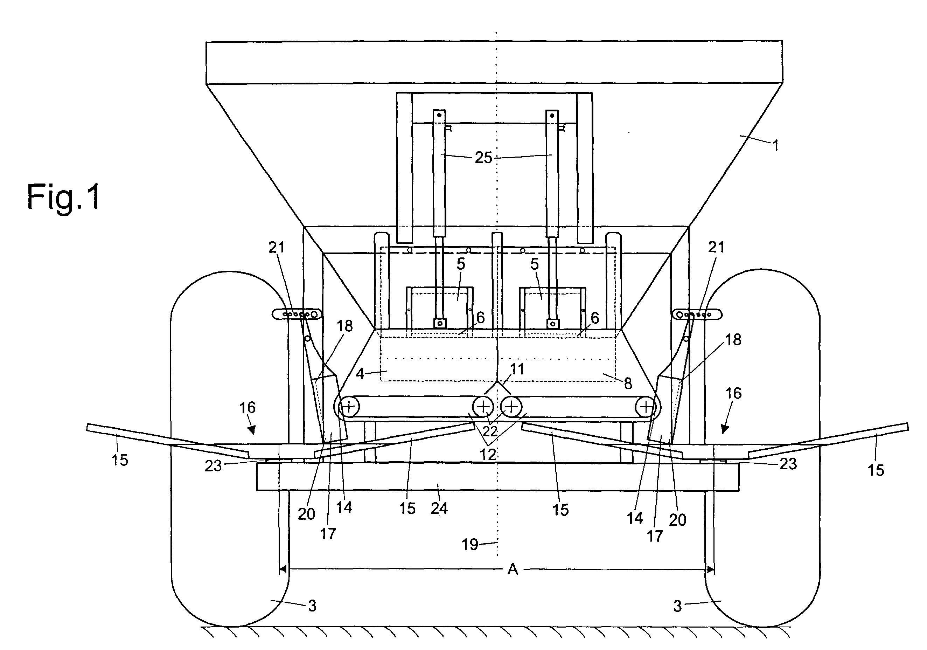

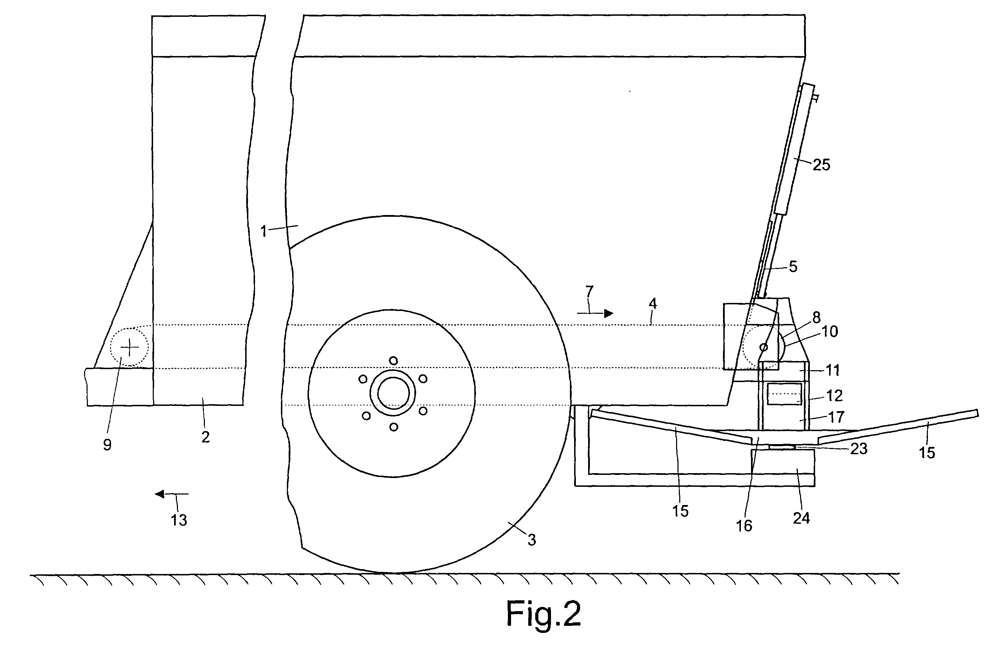

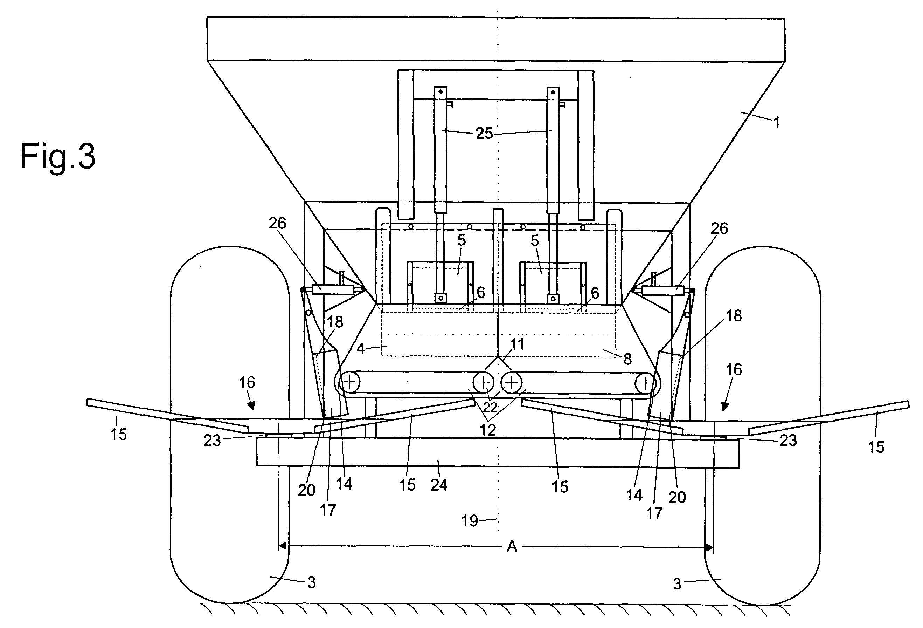

Das Ausführungsbeispiel gemäß Fig.3 unterscheidet sich von dem Ausführungsbeispiel gemäß den Fig.1 und 2 dadurch, daß an Stelle der Lochstreben 21 die motorischen Einstellelemente 26 für die Leitelemente 17 vorgesehen sind. Hierbei kann die Einstellung der Schieber 5 über die motorischen Einstellelemente 25 mit den Einstellelementen 26 der Leitelemente 15 miteinander über eine elektronische Einstellvorrichtung gekoppelt sein, so daß in einfacher Weise ein eventueller Mengeneffekt ausgleichbar ist.

In nicht dargestellter Weise kann vorgesehen sein, daß das Antriebsgehäuse 24 für die Schleuderscheiben 16 mit den Querförderbändern 12 und den Leitelementen 17 an einem nicht dargestellten Pendelrahmen angeordnet sind, der um eine in Fahrtrichtung 13 verlaufende Achse verschwenkbar oder pendelnd aufgehängt ist, so daß immer eine Parallellage des Antriebsgehäuses 24 und des Wurffächers zur bestreuenden Oberfläche gewährleistet ist. Hierbei können zwischen dem Rahmen 2 des Großflächendüngerstreuers und diesem Pendelrahmen Einstellmittel und/oder Dämpfungsmittel angeordnet sein, die über eine elektronische Einrichtung ansteuerbar sind, um diese Parallellage des Streuwerkes und somit des Streufächers 16, 17 und 24 zur bestreuenden Oberfläche gewährleisten.

**[Stand der Technik]**

**[Aufgabe der Erfindung]**

**[Beispiele]**

**[Bezugszeichenliste]**

## Patentansprüche

1. Düngerstreuer, insbesondere zum Ausbringen von körnigem und pulverigem Material, mit einem Rahmen, eigenem Fahrwerk und einem auf dem Rahmen befestigten Vorratsbehälter und zumindest einem Streuorgan zum Verteilen des Materials und zumindest einem Transportband zum Materialfördern zu dem Streuorgan, welches vorzugsweise zwei um aufrechte Achsen rotierende mit Wurfschaufeln besetzte Schleuderscheiben aufweist, wobei der Vorratsbehälter als in Fahrtrichtung langgestreckter Behälter ausgebildet ist und im unteren Bereich des Vorratsbehälters zumindest ein über Umlenkrollen geführtes, umlaufendes Transportband angeordnet ist, wobei in der der Förderrichtung zugewandten Vorratsbehälterwand sich eine zumindest über einen Schieber einstellbare Auslauföffnung befindet, dadurch gekennzeichnet, daß unter dem Förderende (10) des(r) Transportbandes (4) (Transportbänder) zwei in entgegengesetzter und quer zur Fahrtrichtung (13) nach außen fördernde Querförderbänder (12) angeordnet sind, daß unterhalb jedes Förderendes (14) der Querförderbänder (12) jeweils eine rotierend angetriebene und mit Wurfschaufeln (15) besetzte Schleuderscheibe (16) angeordnet ist, daß oberhalb jeder Schleuderscheibe (16) und in einem Abstand zum Ende jedes Querförders (14) jeweils ein Leitelement (17) zum Leiten des Düngers auf die Schleuderscheibe (16) angeordnet ist.

2. Düngerstreuer nach Anspruch 1, dadurch gekennzeichnet, daß in der Vorratsbehälterwand zwei Auslauföffnungen (6) angeordnet sind, die jeweils von einem Schieber (5) in ihrer Öffnungsweite individuell mittels Einstellmittel (25) einstellbar sind.

3. Düngerstreuer nach einem oder mehreren der vorstehenden Ansprüche, dadurch gekennzeichnet, daß zwischen dem Förderende (10) des Förderbandes (4) und den Querförderbändern (12) ein dachförmiges Element (11) angeordnet ist.

4. Düngerstreuer nach einem oder mehreren der vorstehenden Ansprüche, dadurch gekennzeichnet, daß die Leitelemente (17) in ihrer Winkellage einstellbar sind.

5. Düngerstreuer nach einem oder mehreren der vorstehenden Ansprüche, dadurch gekennzeichnet, daß die Leitelemente (17) derart angeordnet sind, daß sie in Fahrtrichtung (13) gesehen, mit ihren oberen Enden (18) einen größeren Abstand zur Längsmittelachse (19) des Streuers als mit ihren unteren Ende (20) aufweisen.

6. Düngerstreuer nach einem oder mehreren der vorstehenden Ansprüche, dadurch gekennzeichnet, daß die Schleuderscheiben (16) auswechselbar auf den Antriebswellen (23) angeordnet und gegen anders ausgebildete Schleuderscheiben austauschbar sind.

7. Düngerstreuer nach einem oder mehreren der vorstehenden Ansprüche, dadurch gekennzeichnet, daß die Wurfschaufeln (15) auswechselbar auf den Schleuderscheiben (16) angeordnet und gegen anders ausgebildete Wurfschaufeln austauschbar sind.

8. Düngerstreuer nach einem oder mehreren der vorstehenden Ansprüche, dadurch gekennzeichnet, daß die Wurfschaufeln (15) winkelförmig verschwenkbar und in unterschiedliche Positionen einstellbar auf den Schleuderscheiben (16) angeordnet sind.

9. Düngerstreuer nach einem oder mehreren der vorstehenden Ansprüche, dadurch gekennzeichnet, daß die Schleuderscheiben (16) mit ihren Antriebsgehäuse (24) in Fahrtrichtung (13) verschiebbar und in verschiedene Positionen einstellbar am Rahmen (2) des Düngerstreuers angeordnet sind.

10. Düngerstreuer nach einem oder mehreren der vorstehenden Ansprüche, dadurch gekennzeichnet, daß die Einstellung der Schieber (5) und der Leitelemente (17) miteinander gekoppelt sind.

11. Düngerstreuer nach einem oder mehreren der vorstehenden Ansprüche, dadurch gekennzeichnet, daß die Querförderbänder (12) mit einer größeren Geschwindigkeit als das Transportband (4) angetrieben werden.

12. Düngerstreuer nach einem oder mehreren der vorstehenden Ansprüche, dadurch gekennzeichnet, daß die als Spannrollen wirkenden Umlenkrollen (22) der Querförderbänder (12) im inneren Bereich angeordnet sind.

13. Düngerstreuer nach einem oder mehreren der vorstehenden Ansprüche, dadurch gekennzeichnet, daß der Achsabstand (A) der Schleuderscheiben (16) zumindest 1,30 m, vorzugsweise etwa 1,50 m beträgt.
